# EUROPEAN PATENT APPLICATION

(11) **EP 1 959 365 A1**
(43) Date of publication of application: **20.08.2008**
(21) Application number: 08356027.6
(22) Date of filing: 15.02.2008
(51) Int. Cl.: G06F 17/30

(54) **Method and system for updating RSS feeds**

(30) Priority: 16.02.2007 CN 200710080292
(71) Applicant: Esobi Inc., Offshore Incorpotions (Cayman) Limited Scotia Centre, 4th Floor George Town (KY)
(72) Inventor: Huang, Tzu-Kuei, Taipei City 10645 Taiwan (CN); Tsai Hong-Yang, Taipei City 10645 Taiwan (CN)
(74) Representative: Maureau, Philippe

(57) **Abstract**

In a method for updating RSS feeds (41), summaries of new content are downloaded on a regular basis from a subscribed feed (41). When a summary of new content is downloaded, the new content can also be downloaded via a URL in the summary according to user's settings so as to pre-load the new content, thereby achieving greater user convenience.

## Description

The invention relates to a really simple syndication (RSS) feedupdatingmethod, moreparticularlytoamethod and system for RSS feed updating capable of pre-loading new content.

With the popularity of the Internet, people have grown used to obtaining information and searching data through the Internet. Many people record addresses of frequently visited websites, such as news websites and blogs, in "My Favorites" so as to be able to go directly to these websites regularly (e.g., daily) to log in and browse latest content of news, articles, etc., in the future. However, there are some problems with this approach. For instance, the user may find the data on the web pages stale or uninteresting after taking the time to log in, which results in user inconvenience.

Therefore, there is available a new way of providing information on the networks, which is known as Really Simple Syndication (hereinafter referred to as RSS for short) . RSS is a format based on XML (extensible Markup Language) for publishing content of information on the Web, making it possible for users to subscribe to information content of interest, and for the most recent information content to be sent to subscribers in real time.

Specifically, to read RSS content, a user needs to install an RSS reader in a user terminal and then subscribe to various RSS feeds or channels provided by websites through the RSS reader. The RSS reader checks the subscribed RSS feeds regularly for updates, i.e., the RSS reader will automatically download summaries (including, e.g., a title, a description, and a URL or link) of latest content of news or articles on the subscribed feeds to the user terminal every user-determined time, so that the user can have updated information on the subscribed feeds in real time. If the user is interested in any new content or update, the user can click the corresponding summary to use the associated URL or link to connect to the corresponding web page in order to browse the full text of the new content. Thus, the inconveniences associated with having to connect to each website regularly to check for updates can be overcome.

Since current RSS readers merely download summaries of new content when checking for updates, if the user wants to view the full text of the new content, the user needs to connect to the corresponding web page in the website via the Internet. Thus, the browsing environment is restricted, and the user needs to view the full text in an environment with an Internet connection, which is inconvenient in terms of use. Moreover, the new content may possibly be removed from the website after a period of time, e.g., a few days, weeks or months, and cannot be connected to and browsed, thereby imposing a time constraint on the new content.

Therefore, the object of the present invention is to provide a method and system for updating RSS feeds, which can achieve greater user convenience.

Another object of the present invention is to provide a method and system for updating RSS feeds, which can be substantially free from time constraints.

In the present invention, after a summary of new content is downloaded, the new content can be automatically downloaded according to user settings so as to enable the user to view the new content in an environment without an Internet connection (e.g., offline), thereby achieving greater user convenience.

Accordingly, the method for updating RSS feeds of this invention includes the following steps:
(A) downloading and storing a summary of new content of a subscribed feed, the summary of the feed containing a title and a URL; and
(B)determining on and off states of an offline browsing mode, downloading and storing the new content via the URL in the summary of the new content if the offline browsing mode is in the on state, and refraining from downloading the new content if the offline browsing mode is in the off state.

Furthermore, after downloading the new content, the summary of the new content can be set to point to the downloaded new content instead of pointing to a web page to which the URL corresponds, so that the user can directly browse the locally stored new content upon clicking the summary, without connecting to the web page at the remote end via the Internet, thereby achieving greater user convenience.

In addition, since the web page containing the new content may include some relative URLs, such as an image URL or a background URL, and since these relative URLs are linked to data located in the same website, if the new content is directly opened after being downloaded to the user terminal, the data of the relative URLs cannot be displayed in a normal fashion. Therefore, in the present invention, a relative URL in the downloaded new content is converted to a remote URL corresponding to the URL of the website, so that data of the relative URL in the downloaded new content can be displayed in a normal fashion.

Thus, in the aforesaid step (B), after downloading the new content, the new content is parsed to determine whether the new content contains a relative URL, and the relative URL, if present, is converted to a remote URL corresponding to the URL of the subscribed feed.

Other features and advantages of the present invention will become apparent in the following detailed description of the preferred embodiment with reference to the accompanying drawings, of which:
Figure 1 is a schematic diagram to illustrate the preferred embodiment of an RSS reader according to the present invention, which is connected to a website having a feed for subscription via the Internet;
Figure 2 is a flowchart to illustrate a feed updating procedure in the preferred embodiment; and
Figure 3 is a flowchart to illustrate a browsing procedure in the preferred embodiment.

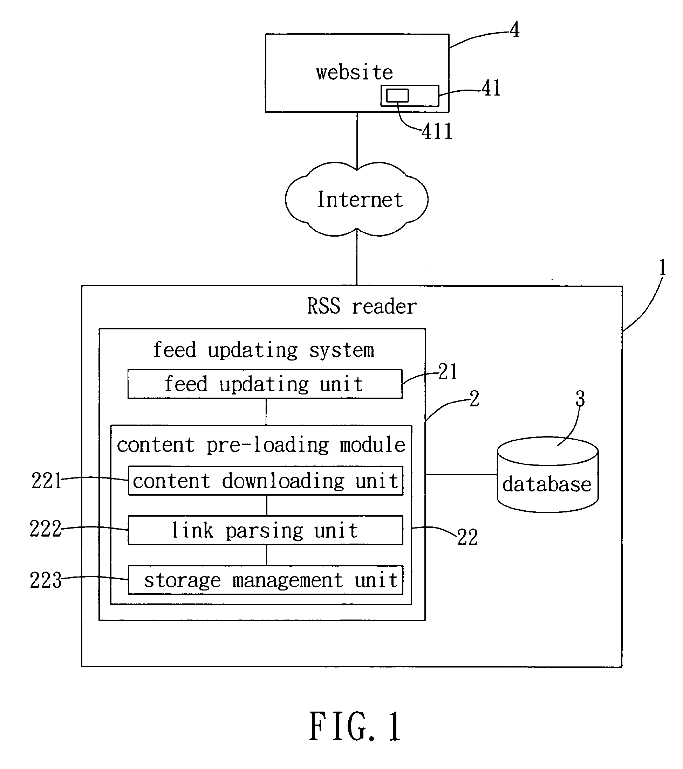

Figure 1 discloses a preferred embodiment of a Really Simple Syndication Reader (hereinafter referred to as the RSS reader) 1 according to the present invention. The RSS reader 1 is used to obtain summaries of new content in one or more RSS feeds 41 from one or more websites 4 via the Internet. Tasks of each website 4 are executed by a server, and each website 4 has one or more RSS feeds 41 to provide content, such as news and articles. For each website 4, an item of summary corresponding to each entry of content is generated, and a plurality of summaries are grouped into a summary file 411 corresponding to an RSS feed 41, e.g. , grouping the most recent one hundred items of summaries, for downloading by the RSS reader 1 . When the website 4 has new content, a summary for the new content is generated, and the summary file 411 of the corresponding RSS feed 41 is updated, i.e., adding the summary of the new content to the summary file 411. If the number of summaries in the summary file 411 exceeds a predetermined limit, the summaries that were generated at a time most distant from the current time are deleted from the summary file 411.

The user can subscribe to feeds 41 of interest to obtain summaries of new content in the subscribed feeds 41 through the RSS reader 1. Certainly, the user can subscribe to one or more feeds 41, which may come from different websites 4. To facilitate description, the present invention will be exemplified using an example in which the user subscribes to a feed (which is hereinafter referred to as the subscribed feed) 41 of a website 4 using the RSS reader 1.

The RSS reader 1 may be a firmware connectible to the Internet, or a program. The program can be pre-stored in a storage medium, such as an optical disk, for installation in and execution by an electronic device that can be connected to the Internet. The RSS reader 1 in this embodiment includes a feed updating system 2 and a database 3. The database 3 is a storage medium, such as a hard disk, a memory card, a memory, etc., for storing data of the RSS reader 1, such as content, summaries of content, relevant programs, information of the subscribed feed 41, etc. Certainly, the RSS reader 1 in this embodiment further has basic components that other conventional RSS readers have, such as a control module for executing corresponding tasks in response to control commands from the user. However, as such components are well known to those skilled in the art and are not crucial features of the present invention, they will not be discussed herein for the sake of brevity.

The feed updating system 2 includes a feed updating unit 21 and a content pre-loading module 22. The feed updating unit 21 is used to download summaries of new content in the subscribed feed 41 regularly. Specifically, the feed updating unit 21 downloads the summary file 411 of the subscribed feed 41 regularly, and compares the summary file 411 with the summaries stored in the database 3 to determine whether there is any summary of new content (i.e., a summary of content yet to be stored in the database 3). If affirmative, the feed updating unit 21 sends the summary of the new content to the content pre-loading module 22 for storage in the database 3. The feed updating unit 21 is set with a predetermined time interval associated with an updating frequency, and the feed updating unit 21 downloads summaries of new content from the subscribed feed 41 at the predetermined time intervals. The value of the predetermined time interval may be adjusted according to the user' s settings, e.g., 30minutes. The content pre-loading module 22 can be used to download the corresponding new content after downloading the summary of the new content. In order to enhance selectivity in use, the content pre-loading module 22 in this embodiment has an offline browsing mode, which can be switched between on and off states under the control of the user. When the offline browsing mode is in the on state, the content pre-loading module 22 automatically downloads the corresponding new content when the summary of the new content is downloaded. When the offline browsing mode is in the off state, the content pre-loading module 22 refrains from downloading any new content. Therefore, the content pre-loading module 22 in this embodiment includes a content downloading unit 221 for downloading new content, and a storage management unit 223 responsible for accessing the downloaded new content.

Since the summary of a piece of new content points to the corresponding web page (i.e., connection to the corresponding web page is conducted via the Internet using the URL), the storage management unit 223 in this embodiment will, upon storing the downloaded new content in the database 3, enable the summary of the new content to point to the downloaded new content, i.e., when the summary of the new content is clicked or selected, the downloaded new content will be read from the storage address of the new content, without connecting to the website 4.

Furthermore, the downloaded new content may have one or more relative URLs (links) to link to local data (i.e., data within the same website 4), e.g., an image URL, a background URL, etc. However, upon storing the downloaded new content in the database 3, the relative URL (s) of the new content cannot be used to connect to data that are actually located at a remote terminal. Therefore, the content pre-loading module 22 in this embodiment further has a link parsing unit 222 for converting a relative URL to a remote URL corresponding to the URL of the subscribed feed 41, so that the data which the relative URL links to can be correctly presented in case of need. For example, if the URL of the subscribed feed 41 is http:llwww.somewhere.com, the relatively linked image URL is <img src=" /logo. gif>", and the body background URL is <body background=" /bg. jpg">, the link parsing unit 222 will convert the relative links respectively to corresponding remote URLsof<imgsrc="http://www.somewhere.com/logo.gif">, and <body background=" http://www.somewhere.com/bg.jpg">.

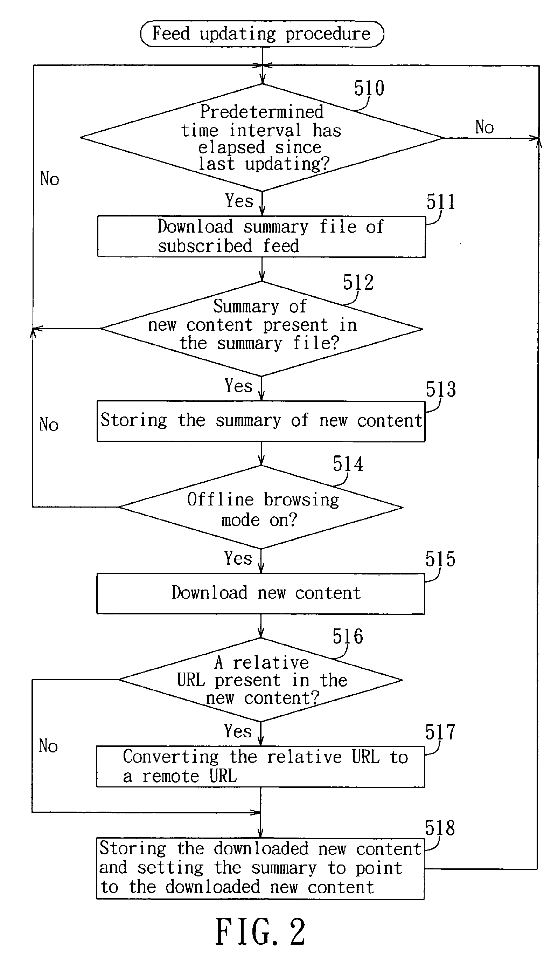

Referring to a feed updating procedure illustrated in Figure 2, the feed updating function of the feed updating unit 21, the content downloading unit 221, the link parsing unit 222, and the storage management unit 223 will become more apparent from the following description of the operational flow of the present invention.

Initially, in step 510, the feed updating unit 21 of the feed updating system 2 determines whether a predetermined time interval since the last updating has elapsed. If the determination in step 511 is negative, the flow returns to step 510 to wait until the predetermined time interval has elapsed.

If the determination in step 510 is affirmative, step 511 is executed, in which the feed updating unit 21 downloads the summary file 411 of the subscribed feed 41. Specifically, the feed updating unit 21 sends a request in the format of Hyper Text Transfer Protocol (HTTP) to the server of the website 4 to obtain permission to download the summary file 411 of the subscribed feed 41 from the server of the website 4. The server of the website 4 will correspondingly send the summary file 411 to the RSS reader 1 in reply. The summary file 411 is written in a format based on extensible Markup Language (XML), and includes a plurality of summaries. Each summary includes a title, a description, and a URL (link) of the corresponding web page of the new content.

Thereafter, when the RSS reader 1 receives the summary file 411 of the subscribed feed 41, the feed updating unit 21 executes step 512 to determine whether there is a summary of new content in the summary file 411. Specifically, the feed updating unit 21 compares the summaries in the summary file 411 with the summaries stored in the database 3. If a summary in the summary file 411 is identical to a summary in the database 3 (i.e., the former was stored in the database 3 previously), the feed updating unit 21 determines that the summary in the summary file 411 is an old one. If a summary in the summary file 411 does not match any one of the summaries in the database 3, the feed updating unit 21 determines that the summary in the summary file 411 is the summary of new content. If the determination in step 512 is affirmative, step 513 is executed. On the contrary, if the determination in step 512 is negative, the flow returns to step 510 to wait for a next updating. When the feed updating unit 21 determines that there is a summary of new content in the summary file 411, it will send the summary of the new content to the content pre-loading module 22.

In step 513, the storage management unit 223 of the content pre-loading module 22 first stores the summary of the new content in the database 3 to enable the user to browse the summary of the new content using the RSS reader 1 and to select the summary when the user is interested in reading the entire content of the new content.

After step 513 is ended, the flow goes to step 514, in which the content downloading unit 221 of the content pre-loading module 22 determines whether the offline browsing mode is in the on state. If the offline browsing mode is determined in step 514 to be in the off state, the content downloading unit 221 refrains from executing the task of downloading the new content, i.e., does not download the new content, and the flow returns to step 510. If the offline browsing mode is determined in step 514 to be in the on state, the flow goes to step 515.

In step 515, the content downloading unit 221 downloads the new content. Specifically, the format of the new content is Hypertext Markup Language (HTML). The content downloading unit 221 uses the URL in the summary of the new content to download the new content according to the HTTP protocol, and subsequently sends the downloaded new content to the link parsing unit 222. After step 515 is ended, the flow goes to step 516.

In step 516, the link parsing unit 222 parses the new content to determine whether there is a relative URL. If it is determined in step 516 that there is a relative URL, the link parsing unit 222 executes step 517 to convert the relative link to a corresponding remote link. After step 517 is ended, the flow goes to step 518. Otherwise, if it is determined in step 516 that there is no relative URL, the flow directly proceeds to step 518. In addition, the link parsing unit 222 will send the new content to the storage management unit 223 after the conversion or where conversion is not required.

In step 518, the storage management unit 223 stores the new content in the database 3. Moreover, the storage management unit 223 updates the recently downloaded summary of the new content to point to the new content in the database 3 instead of to the new content on the website 4. After step 518 is ended, the flow returns to step 510 to wait for a next updating.

It is noted that the order of execution of steps 513 and 514 can be adjusted according to design requirements. For instance, the content downloading unit 221 may execute step 514 first so that the storage management unit 223 stores the summary of the new content in the database 3 after the offline browsing mode is determined to be in the off state or after the pointing setting of the summary is updated in step 518, without being limited to the disclosure in this embodiment.

Hence, unlike the aforementioned conventional feed updating method which merely stores summaries of new content, this embodiment further provides pre-loading of new content (as in steps 514 to 518). The user is thus able to view the summary of new content and select the summary upon viewing. When the summary is selected, the storage management unit 223 in this embodiment will prioritize retrieval of the previously downloaded new content from the database 3 for displaying, so that the displaying of the previously downloaded new content is prioritized over the displaying of the new content on the website 4.

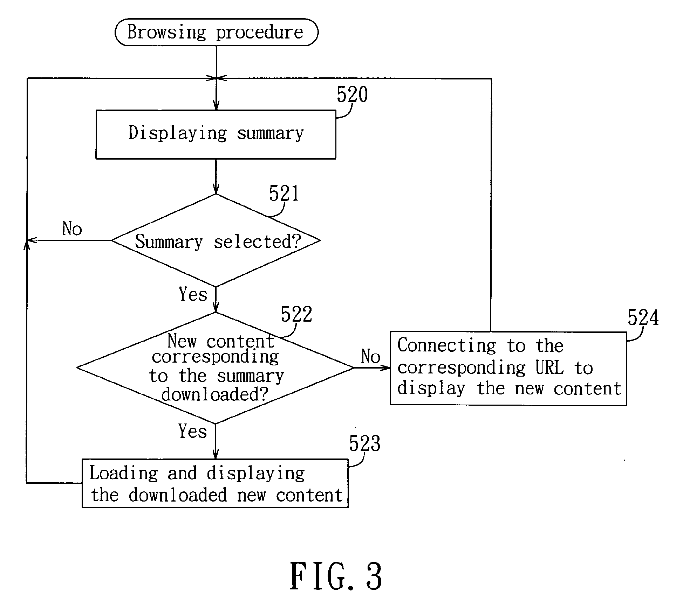

Specifically, referring to Figure 3, the user can use an operating interface (not shown) of the RSS reader 1 to initiate a content browsing procedure. First, in step 520, the RSS reader 1 retrieves all the summaries in the database 3 via the storage management unit 223 and displays the same to the user for selection by the user. Certainly, the storage management unit 223 can select, retrieve and display portions of the summaries according to the settings of the RSS reader 1, for example, displaying only summaries of new content or summaries of content within a certain period of time, and then displaying the summaries of the remaining content at the request of the user. After step 520 is ended, step 521 is executed.

In step 521, the RSS reader 1 determines whether a summary has been selected, i.e., the user has clicked to view the content. If the determination in step 521 is affirmative, step 522 is executed, in which the storage management unit 223 determines whether the new content corresponding to the selected summary has been downloaded. Otherwise, if the determination in step 521 is negative, step 520 is continued to display the summaries for browsing by the user.

If it is determined in step 522 that the corresponding new content has not been downloaded, step 524 is executed to link to the relative URL in the selected summary via the Internet so as to display the web page containing the new content on the website 4 for viewing by the user. Otherwise, if it is determined in step 522 that the corresponding new content has been downloaded, step 523 is executed to retrieve and load the previously downloaded new content from the database 3 and to display the same for viewing by the user. Thus, since the new content displayed by the RSS reader 1 is located in the local database 3, the speed of retrieving the new content is faster to thereby avoid keeping the user waiting for too long. Besides, since there is no need to connect to the web page containing the new content via the Internet, the RSS reader 1 is able to display the new content for viewing by the user without the need to be disposed in an Internet environment, thereby achieving an environment of use which is substantially free from limitations. Furthermore, since the relative URL in the downloaded new content has been converted to a remote URL, if the RSS reader 1 can connect to the Internet, the corresponding data of the URL in the download new content can be displayed in a normal fashion. After the user has finished viewing the new content, the user can end step 523 or 524 and return to step 520 to continue browsing other summaries.

In addition, if the user wants to switch on/off the offline browsing mode, the operating interface of the RSS reader 1 can be used to make settings so as to correspondingly input an offline browsing mode setting command. When the content pre-loading module 22 receives the offline browsing mode setting command, the content pre-loading module 22 will correspondingly change the on/off state of the offline browsing mode.

As illustrated herein, the present invention enables the user to select to pre-load new content to the RSS reader 1 upon updating of the subscribed feeds, so that the user can view the new content without requiring an Internet environment, thereby achieving the effect of better user convenience. Furthermore, since the downloaded new content is stored in the database 3 of the RSS reader 1, the user can keep the new content for a relatively long time, thereby overcoming the time constraint imposed on the new content on the website.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all such modifications and equivalent arrangements.

## Claims

1. A method for updating RSS feeds (41), **characterized by** the following steps:
(A) downloading and storing a summary of new content of a subscribed feed (41), the summary of the feed (41) containing a title and a URL; and
(B)determining on and off states of an offline browsing mode, downloading and storing the new content via the URL in the summary of the new content if the offline browsing mode is in the on state, and refraining from downloading the new content if the offline browsing mode is in the off state.

2. The method for updating RSS feeds (41) according to claim 1, **characterized in that** the new content is in Hypertext Markup Language format.

3. The method for updating RSS feeds (41) according to claim 1, **characterized in that**, in step (B), after downloading the new content, the downloaded new content is parsed to determine whether the new content contains a relative URL, and the relative URL is converted to a remote URL corresponding to the URL of the subscribed feed (41).

4. The method for updating RSS feeds (41) according to claim 3, **characterized in that** the relative URL is one of an image URL and a background URL.

5. The method for updating RSS feeds (41) according to claim 1, **characterized in that**, in step (B), after downloading the new content, the summary is set to point to the downloaded new content.

6. The method for updating RSS feeds (41) according to claim 5, further **characterized by** a step (C) of displaying one of the downloaded new content and the new content on the subscribed feed (41) upon selection of the summary, wherein, the displaying of the downloaded new content being prioritized over the displaying of the new content on the subscribed feed (41).

7. The method for updating RSS feeds (41) according to claim 1, **characterized in that**, in step (A), the summary of new content is downloaded from the subscribed feed (41) at predetermined time intervals.

8. A computer program product comprising a storage medium including program instructions for enabling an electronic device to execute a feed updating procedure, the feed updating procedure being **characterized by** the following steps:
(A) downloading and storing a summary of new content of a subscribed feed (41), the summary of the feed (41) containing a title and a URL; and
(B)determining on and off states of an offline browsing mode, downloading and storing the new content via the URL in the summary of the new content if the offline browsing mode is in the on state, and refraining from downloading the new content if the offline browsing mode is in the off state.

9. The computer program product according to claim 8, **characterized in that**, in step (B), after downloading the new content, the downloaded new content is parsed to determine whether the new content contains a relative URL, and the relative URL is converted to a remote URL corresponding to the URL of the subscribed feed (41).

10. The computer program product according to claim 9, **characterized in that** the relative URL is one of an image URL and a background URL.

11. The computer program product according to claim 8, **characterized in that**, in step (B), after downloading the new content, the summary is set to point to the downloaded new content.

12. A feed updating system (2) for an RSS reader (1), which is connectible to a subscribed feed (41) on a website (4), said feed updating system (2) being
**characterized by**:
a feed updating unit (21) for downloading a summary of new content from the subscribed feed (41), the summary of the feed (41) containing a title and a URL; and
a content pre-loading module (22) for downloading the new content via the URL in the summary of the new content, said content pre-loading module (22) having an offline browsing mode that can be switched between on and off states, said content pre-loading module (22) downloading the new content via the URL when the offline browsing mode is switched to the on state, said content pre-loading module (22) refraining from downloading the new content when the offline browsing mode is switched to the off state.

13. The feed updating system (2) for an RSS reader (1) according to claim 12, **characterized in that**, after downloading the new content, said content pre-loading module (22) further parses the downloaded new content to determine whether the new content contains a relative URL, and converts the relative URL to a remote URL corresponding to the URL of the subscribed feed (41).

14. The feed updating system (2) for an RSS reader (1) according to claim 13, **characterized in that** the relative URL is one of an image URL and a background URL.

15. The feed updating system (2) for an RSS reader (1) according to claim 12, **characterized in that**, after downloading the new content, said content pre-loading module (22) further causes the summary of the new content to point to the downloaded new content.

16. The feed updating system (2) for an RSS reader (1) according to claim 12, **characterized in that** said feed updating unit (21) downloads the summary of new content from the subscribed feed (41) at predetermined time intervals.

17. A method for pre-loading new RSS content, **characterized by** the following steps:
(A) when a summary of new content is downloaded from a subscribed feed (41), downloading the new content via a URL of the summary; and
(B)setting the summary to point to the downloaded new content.

18. The method for pre-loading new RSS content according to claim 17, **characterized in that** the downloaded new content is in Hypertext Markup Language format.

19. The method for pre-loading new RSS content according to claim 17, further **characterized by** a step (C) of parsing the downloaded new content to determine whether there is a relative URL, and converting the relative URL to a remote URL corresponding to the URL of the subscribed feed (41).

20. The method for pre-loading new RSS content according to claim 19, **characterized in that** the relative URL is one of an image URL and a background URL.

21. A content pre-loading module for RSS, which is adapted to be connected to a subscribed feed (41) that provides new content, the new content having a summary containing a URL, said content pre-loading module being **characterized by**:
a content downloading unit (221) for downloading the new content via the URL of the summary upon receiving the summary of the new content; and
a storage management unit (223) for setting the summary to point to the downloaded new content.

22. The content pre-loading module for RSS according to claim 21, further **characterized by** a link parsing unit for parsing the downloaded new content to determine whether there is a relative URL therein, and for converting the relative URL to a remote URL corresponding to the URL of the subscribed feed (41).

23. The content pre-loading module for RSS according to claim 22, **characterized in that** the relative URL is one of an image URL and a background URL.
